**Europäisches Patentamt**

**European Patent Office**

**Office européen des brevets**

(11) Publication number : **0 388 860 B1**

# (12) EUROPEAN PATENT SPECIFICATION

(45) Date of publication of patent specification :
26.07.95 Bulletin 95/30

(51) Int. Cl.⁶ : **G06K 11/06,** G06F 3/033,
G01B 7/004, G08C 21/00

(21) Application number : **90105164.9**

(22) Date of filing : **19.03.90**

(54) **Coordinates input apparatus.**

(30) Priority : **22.03.89 JP 69843/89**

(43) Date of publication of application :
**26.09.90 Bulletin 90/39**

(45) Publication of the grant of the patent :
**26.07.95 Bulletin 95/30**

(84) Designated Contracting States :
**DE FR GB**

(56) References cited :
**EP-A- 0 159 498**
**EP-A- 0 259 894**
**EP-A- 0 295 699**

(73) Proprietor : **SEIKO INSTRUMENTS INC.**
**31-1, Kameido 6-chome**
**Koto-ku**
**Tokyo 136 (JP)**

(72) Inventor : **Saeki, Shinji**
**c/o Seiko Instruments Inc.,**
**31-1, Kameide 6-chome**
**Koto-ku, Tokyo (JP)**

(74) Representative : **Fleuchaus, Leo, Dipl.-Ing. et**
**al**
**Patentanwälte**
**Schroeter, Fleuchaus, Lehmann, Wehser**
**Holzer & Gallo**
**Postfach 71 03 50**
**D-81453 München (DE)**

## Description

This invention relates to a coordinates input apparatus for inputting coordinates value to an information apparatus such as a computer, and more particularly to a coordinates input apparatus utilizing electromagnetic induction.

There have been proposed various types of the coordinates input apparatus. EP-A- 295 699 and EP-A- 259 894 disclose a coordinate input apparatus for position detecting by a position pointer with groups of sense lines arranged orthogonally. The plurality of sense lines in X-direction as well as in Y-direction are superimposed and connected to scanning means. In order to send the induced voltage signal from amongst various voltages induced in the selected loop coil. The circuitry comprises a connection switching circuit for connecting the selected loop coil alternately to the transmission circuit and the receiving circuit. The fact that each loop coil is used for both transmitting A.C. signals and receiving the induced signals the magnitude of the induced signal is attenuating during the receiving time period and, therefore, it is difficult to detect and calculate the coordinates accurately.

EP-A- 159498 discloses sense lines which are commonly connected at one end and further a cable free coordinate input device.

One of the conventional coordinates input apparatus are disclosed in US-A- 4 088 842 and JP-A- 55. 96 411 filed by the same assignor of the present application.

In the conventional coordinates input apparatus described it is necessary to apply an excitation signal from a coordinates input apparatus main body to a coordinates indicator in order to generate an alternating magnetic field from a coordinates indicator. In other words, the coordinates input apparatus main body and the coordinates indicator must be connected by cables. Therefore, when an operator inputs characters, the cable impede free movement of the coordinates indicator and reduce extremely operability of the coordinates input apparatus.

It is therefore an object of the invention to provide a coordinates input apparatus having high operability and not limiting at all the movement of the coordinates indicator.

These and other objects and advantages of this invention are accomplished by a coordinates input apparatus comprising a first sense line group having a plurality of sense lines disposed in parallel with one of the X-Y orthogonal coordinates axes, a second sense line group having a plurality of sense lines disposed in parallel with the other of the X-Y orthogonal coordinates axes, first scanning means for sequentially selecting the first sense line group; excitation means for exciting said first sense line group, second scanning means for sequentially selecting the second sense line group; signal processing means for processing induction signals induced in the second sense line group,induction signal memory means for storing the magnitude of the induction signals processed by the signal processing means, control means for determining coordinates from the induction signals stored in said induction signal memory means, and coordinates indicator having a resonance means for resonating with the excitation signal of the excitation means, wherein said first scanning means is connected to said excitation means exclusively and said second scanning means is connected to said signal processing means exclusively.

The coordinates input apparatus in accordance with the present invention utilizes one group of sense lines for excitation purposes and the other group of sense lines for receiving purposes, thus using the phenomenon that the resonance circuit of the coordinates indicator is resonated by the alternating magnetic field generated from the first sense line group and the induction signals are induced in the second sense line group by the alternating magnetic field occuring in the resonating coordinates indicator. When the distance between a first sense line which is sequentially excited by the first scanning circuit and the coordinates indicator is small, a greater current flows through the resonance circuit of the coordinates indicator. If the distance between a second sense line selected sequentially by the second scanning circuit and the coordinates indicator is small at this time, a greater induction current (induction signal) occurs in the second sense line. For example, the greatest induction signal is induced when an excited first sense line immediately below the coordinates indicator is selected and moreover, when a second sense line immediately below the coordinates indicator is selected. Therefore, the position of the coordinates indicator or in other words, the coordinates, can be determined by storing the magnitudes of the detected induction signals in accordance with the positions of the selected first and second sense lines in the induction signal memory circuit and by comparing the magnitudes by the control circuit.

## BRIEF DESCRIPTION OF THE DRAWINGS

The foregoing objects, features and advantages of the invention will be apparent from the following more detailed description of the invention read in conjunction with the accompanying drawings in which:

Fig. 1 illustrates a configuration of a coordinates input apparatus incorporating the present invention;

Fig. 2 illustrates a configuration of a scanning circuit in the apparatus of the Fig. 1;

Fig. 3 illustrates a configuration of a signal processing circuit of a coordinates indicator in the apparatus of Fig. 1;

Fig. 4 is a diagram of a resonance circuit in a coordinates indicator of Fig. 1;

Fig. 5 is a waveform diagram of signals;

Fig. 6 is an explanatory view for coordinates calculation;

Fig. 7 is an explanatory view of an induction signal memory circuit;

Fig. 8 illustrates another configuration of sense lines; and

Fig. 9 illustrates further configuration of sense lines.

## DETAILED DESCRIPTION

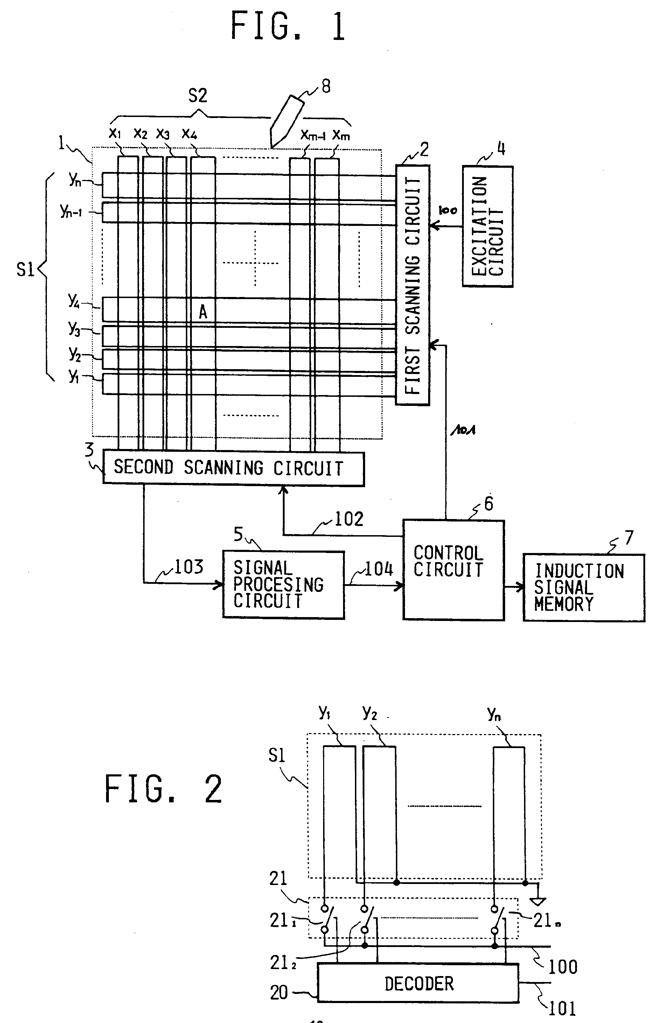

Hereinafter, an embodiment of the present invention will be explained with reference to Figs. 1 to 7. Fig. 1 is a configuration of the coordinates input apparatus in accordance with the present invention. In the drawing, reference numeral 1 represents a sense line group; S1 is a first sense line group having sense lines $y_1$ - $y_n$; S2 is a second sense line group having sense lines $x_1$ - $x_m$; 2 is a first scanning circuit for selecting sequentially the first sense line group S1; 3 is a second scanning circuit for selecting sequentially the second sense line group S2; 4 is an excitation circuit for exciting the first sense line group S1; 5 is a signal processing circuit for processing and digitizing the induction signals induced in the second sense line group S2; 6 is a control circuit consisting of an ordinary CPU circuit; 7 is an induction signal memory circuit for storing the digitized induction signals; and 8 is a coordinates indicator having a resonance circuit (not shown).

Fig. 2 is a detailed configuration of the first scanning circuit 2. Like reference numerals will be used to identify like constituents as in Fig. 1. Reference numeral 20 represents a decoder; 21 is an analog switch group having switch devices $21_1 \sim 21_n$;, 100 is an excitation signal outputted from the excitation circuit 4; and 101 is a selection signal outputted from the control circuit 6. Though the detail of the second scanning circuit 3 is not shown, it has the same configuration as the first scanning circuit 2 and the difference lies in that whereas the excitation signal 100 is inputted to the first scanning circuit 2, the induction signal 103 is outputted from the second scanning circuit 3.

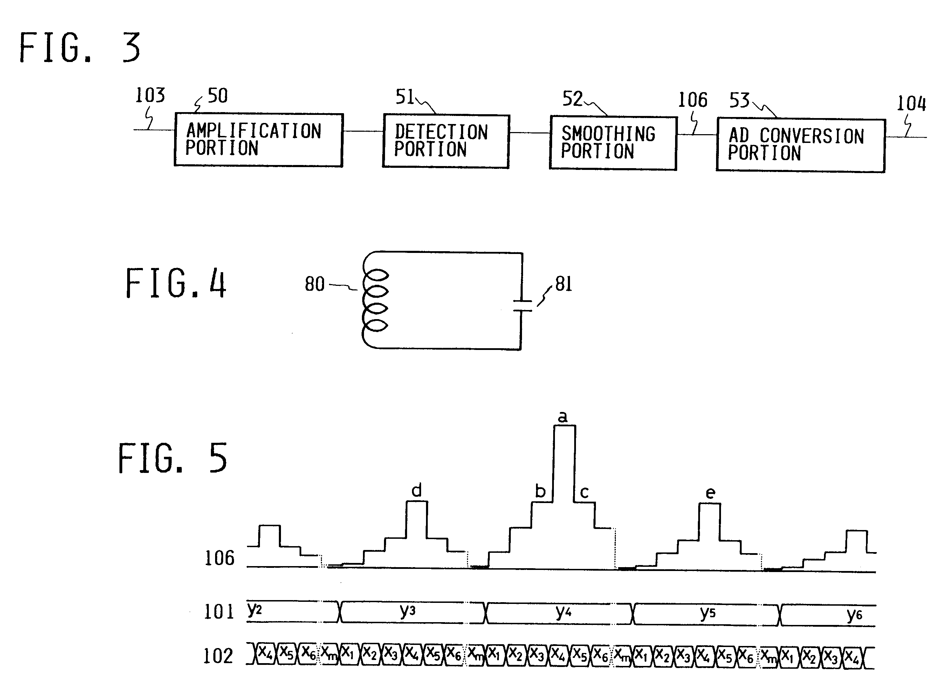

Fig. 3 is a detailed configuration of the signal processing circuit 5. Reference numeral 50 represents an amplification portion; 51 is a detection portion; 52 is a smoothing portion; and 53 is an AD conversion portion.

Fig. 4 shows the resonance circuit contained in the coordinates indicator 8. Reference numeral 80 represents a coil and 81 does a capacitor. They constitute an LC resonance circuit.

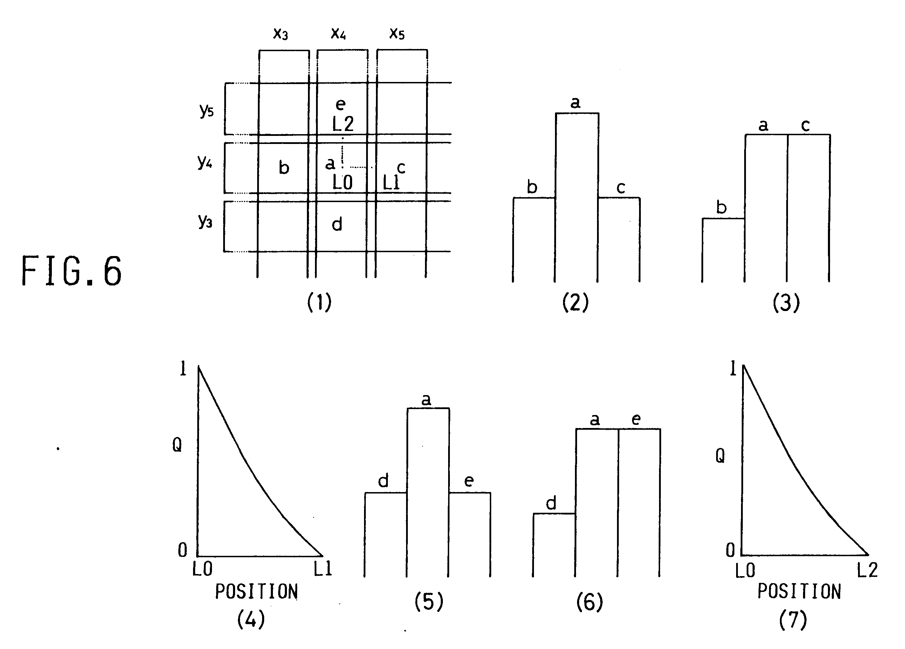

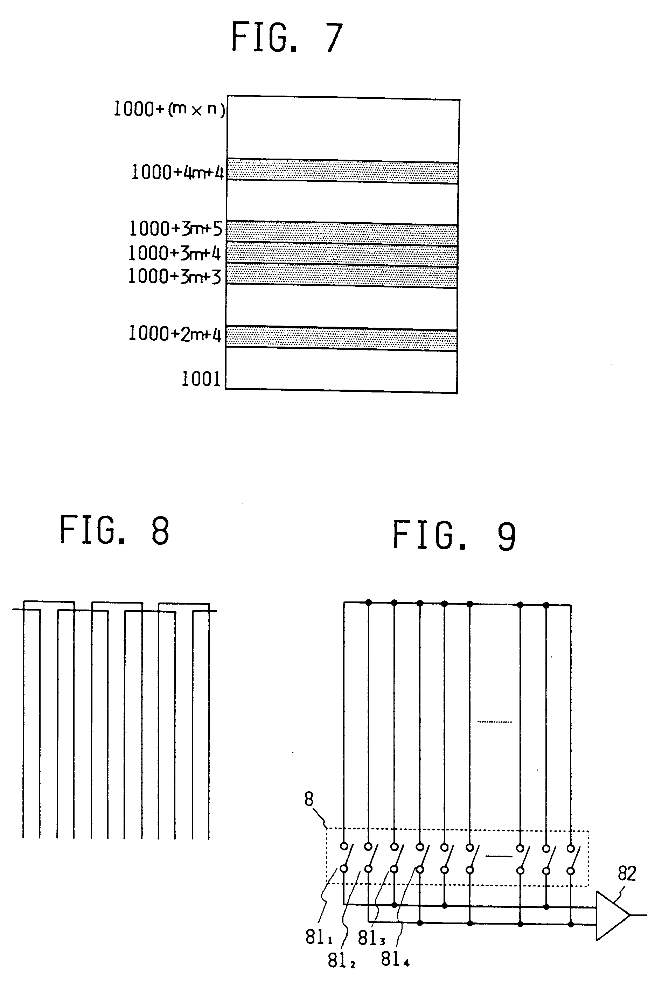

Fig. 5 is a waveform diagram of each signal, Fig. 6 is an explanatory view of coordinates calculation and Fig. 7 is an explanatory view of the induction signal memory circuit 7.

Next, the operation of this embodiment will be explained.

In Fig. 1, the case where the coordinates indicator 8 is positioned at the point of intersection between the sense line $x_4$ and the sense line $y_4$ (Fig. 1, portion A) will be explained. The excitation signal 100 (a sine wave of 614.4 KHz) is outputted from the excitation circuit 4 to the first scanning circuit 2.

First of all, the first scanning circuit 2 selects the sense line $y_1$ of the first sense line group S1 by the selection signal 101 outputted from the control circuit 6. In other words, the decoder 20 in Fig. 2 turns on the analog switch $21_1$ by the selection signal 101, supplies the excitation signal 100 to the first sense line $y_1$ and generates a 614.4 KHz magnetic field from the sense line $y_1$. In the interim, the second scanning circuit 3 selects sequentially the second sense line group S2 in the order of $x_1$, $x_2$, ..., $x_m$ in accordance with the selection signal 102 outputted from the control circuit 6. When scanning of the second sense line group is completed, the first scanning circuit 2 then selects the sense line $y_2$ of the first sense line group S1 using the selection signal 101 outputted from the control circuit 6, while the second scanning circuit 3 sequentially selects the second sense line group S2 in the order of $x_1$, $x_2$, ... , $x_m$ in accordance with the selection signal 102 outputted from the control circuit 6. This scanning is repeated in the same way thereafter and finally, the first scanning circuit 2 selects the sense line $y_n$ of the first sense line group S1 while the second scanning circuit 3 sequentially selects the second sense line group S2 in the order of $x_1$, $x_2$, ... , $x_m$. The series of the selection operations so far (which will be referred to as "scanning"), that is, scanning from the sense line $y_1$ and the sense line $x_1$ to scanning of the sense line $y_n$ and the sense line $x_m$, is referred to as the "full scanning". The signal processing circuit 5 shapes the waveform of the 614.4 KHz induction signal 103 occurring in the second sense line group S2 selected sequentially during the full scanning, digitizes sequentially the magnitude of this signal and generates the induction signal 104. Furthermore, the induction signal 104 thus digitized is sequentially stored in the induction signal memory circuit 7 by the control circuit 6. The method of storing into the induction signal memory circuit 7 will be later described in detail.

Next, the detail of the induction signal described above will be explained with reference to Fig. 5. Fig. 5 is a waveform diagram when the coordinates indicator is positioned at the portion A in Fig. 1, and shows the selection signals 101, 102 inputted to the first and second scanning circuits 2, 3 and the induction signal before AD conversion (signal 106 in Fig. 3) by the signal processing circuit 5. Symbol a̱ represents the induction signal when the first sense line $y_4$ and the second sense line $x_4$ that

are immediately below the portion A are selected, and this signal is the greatest signal among the signals that are detected during the full scanning. Because, the greatest current is generated in the resonance circuit of the coordinates indicator when the sense line $y_4$ which is closest to the coordinates indicator 8 among the first sense line group is selected and the greatest induction current (induction signal) is generated by the magnetic field from the coordinates indicator when the sence line $x_4$ which is the closest to the coordinates indicator 8 among the second sense line group is selected.

Symbols b and c represent the induction signals when the right and left of the portion A, that is, when the first sense line $y_4$ and the second sense line $x_3$, are selected and when the first sense line $y_4$ and the second sense line $x_5$ are selected, respectively. The induction signals b and c are smaller than the induction signal a by the distance between the coordinates indicator 8 and the selected second sense lines, though the induction current flowing through the resonance circuit is the same. Symbols d and e represent the induction signals when the portions above and below the portion A, that is, when the first sense line $y_3$ and the second sense line $x_4$ are selected and when the first sense line $y_5$ and the second sense line $x_4$ are selected, respectively. The induction signals d and e are smaller than the induction signal a by the distance between the coordinates indicator 8 and the selected first sense lines because the induction current flowing through the resonance circuit of the coordinates indicator 8 becomes smaller, though the second sense line for detecting the induction signal is common. Though the magnitudes of the induction signals a ~ e are explained above, the magnitudes of other induction signals are likewise determined by the positional relationship between the positions of the sense lines selected from the first and second sense line groups S1, S2 and the coordinates indicator 8. Incidentally, since the first sense line group S1 and the second sense line group S2 are orthogonal to each other, the second sense line group S2 is not basically induced directly by the signals generated from the first sense line group S1. Therefore, as explained above, the magnitude of an induction signal can be determined from the position relationship between the positions of the sense lines selected from the first and second sense line group S1, S2 and the coordinates indicator 8.

Next, the control circuit 6 calculates the coordinates on the basis of the induction signals sorted in the induction signal memory circuit 7. Here, the method of calculating the coordinates will be explained with reference to the five induction singals a through e.

First of all, the calculation method of the X coordinates by use of the induction signals a, b and c will be explained with reference to Fig. 6. Fig 6(1) shows in enlargement the portions near the portion A shown in Fig. 1. Let's consider the case where the coordinates indicator 8 moves on the center line of the sense line $y_4$ from the center LO of the sense line $x_4$ to $L_1$ between the sense line $x_4$ and the sense line $x_5$. Figs. 6(2) and (3) show the induction signals a, b and c when the coordinates indicator 8 is positioned at LO and L1, respectively. First of all, the explanation will be given with the case where the coordinates indicator 8 is positioned at LO shown in Fig. 6(2). As described already, the induction signals a, b and c are the signals when the sense line $x_4$, the sense line $x_3$ and the sense line $x_5$ are selected while the sense line $y_4$ is selected, respectively. At this time the induction signal a takes the greatest value and the induction signals b and c are equal to each other because the distance between the coordinates indicator 8 and the sense line $x_3$ and the distance between the coordinates indicator 8 and the sense line $x_5$ are equal to each other. Next, the case where the coordinates indicator 8 shown in Fig. 6(3) is positioned at L1 will be explained. At this time, the induction signals a and c are equal to each other because the distance between the coordinates indicator 8 and the sense line $x_4$ and the distance between the coordinates indicator 8 and the sense line $x_5$ are equal to each other. Therefore, the coordinates can be calculated by the application of the system (Japanese Patent Laid-Open No. 96411/1980) proposed by the Applicant of the present invention. In other words, the calculation defined by the following formula is carried out on the basis of the induction signals described above.

Formula 1:  $Q = (V_p - V_{p+1})/(V_p - V_{p-1})$
   where $V_{p+1} > V_{p-1}$

When the induction signal a is substituted into $V_p$, the induction signal b into $V_{p-1}$ and the induction signal c into $V_{p+1}$ in the formula above and when the coordinates indicator 8 is moved from LO to L1, the change of Q at this time is shown in Fig. 6(4). When the coordinates indicator 8 is at the position LO, Q = 1 and when it is at the position L1, Q = 0, as will be obvious from the description given above. When the coordinates indicator 8 is between LO and L1, Q assumes a value satisfying the relation $0 < Q < 1$ which corresponds to this position on a 1:1 basis. Accordingly, it is possible to calculate Q from the induction signals a, b and c by determining experimentally and beforehand the characteristics of this Q and to determine the correct position of the coordinates indicator between L0 and L1 on the sense line. Furthermore, the X coordinates can be determined from Q and the position of the sense line at which the induction signal a is detected. Incidentally, the detailed description of this coordinates calculation method will be omitted because it is described in Japanese Patent Laid-Open No. 96411/1980.

Next, the calculation method of the Y coordinates will be explained on the basis of the inducticn signals a, d and e with reference to Fig. 6. The same concept can be applied to the Y coordinates, too, as to the X coordinates descrived above. It will be assumed that in Fig. 6(1), the coordinates indicator 8 moves on the center line of the sense line $x_4$ from the center L0 of the sense line $y_4$ to $L_2$ between the sense line $y_4$ and the sense line $y_5$. Figs. 6(5) and (6) show the induction signals a, d and e when the coordinates indicator 8 is positioned at L0 and L2 respectively. First of all, the case where the coordinates indicator 8 is positioned at L0 shown in Fig. 6(5) will by explained. As described already, the induction signals a, d and e are the signals when the sense line $x_4$ is selected while the sense line $y_4$ is selected, when the induction signal $x_4$ is selected while the sense line $y_3$ is selected and when the sense line $x_4$ is selected while the sense line $y_5$ is selected, respectively. At this time the induction signal a takes the greatest value and the induction signals d and e are equal to each other because the distance between the coordinates indicator 8 and the sense line $y_3$ is equal to the distance between the coordinates indicator 8 and the sense line $y_5$. Next, the case where the coordinates indicator 8 is positioned at L2 shown in Fig. 6(6) will be explained. At this time the induction signals a and e are equal because the distance between the coordinates indicator 8 and the sense line $y_4$ and the distance between the coordinates indicator 8 and the sense line $y_5$ are equal to each other. Therefore, when the characteristics of Q, when the coordinates indicator 8 is moved from L0 to L2, are determined by substituting the induction signal a into $V_p$, the induction signal d into $V_{p-1}$ and the induction signal e into $V_{p+1}$ on the basis of the formula 1 in the same way as in the case of the X coordinates described already, the result becomes such as shown in Fig. 6(7). As a result, the characteristics which are substantially the same as those of the X coordinates shown in Fig. 6(4) can be obtained and the Y coordinates can be obtained by use of the characteristics of this Q in the same way as in the case of the X coordinates.

Incidentally, the processing described above is carried out by reading the induction signals 104 stored in the induction signal memory circuit 7 by the control circuit 6 which consists of an ordinary CPU circuit.

Here, the method of storing the induction signals 104 into the induction signal memory circuit 7 and the method of reading them out from the induction signal memory circuit 7 will be explained with reference to Fig. 7.

The induction signal memory circuit 7 consists of a random access memory (RAM) and the read/write control is made by the control circuit 6. Fig. 7 shows a memory mapping for storing the induction signals 104 into the random access memory, and represents the case where the addresses are allocated starting at address No. 1001. Incidentally, the address employs decimal representation for ease of description. In the embodiment shown in Fig. 1, the number of combinations of selection of the first sense line group S1 having n sense lines and the second sense line group S2 having m sense lines is n x m. Therefore, the address space of the induction signal memory circuit 7 for storing all the induction signals 104 when full scanning is made once is n x m bytes (assuming that the A-D converted induction signal 104 is an 8-bit data), and the addresses are from No. 1001 to No. 1000 + (n x m). The induction signals 104 are sequentially stored (written) into the induction signal memory circuit 7 starting at address 1,001 in accordance with the sequence of the full scanning by the control circuit 6. In other words, when the $\underline{y}$th ($1 \leq y \leq n$) sense line and $\underline{x}$th ($1 \leq x \leq m$) sense line are selected by the first and second scanning circuits 2 and 3, respectively, the induction signal 104 at this time is stored at address 1000 + (y - 1) x m + X of the induction signal memory circuit 7. The induction signals a~e of the embodiment descrived above in Fig. 6 are stored at the addresses shown in Fig. 7 in accordance with this method.

Next, the method of reading out the induction signals a ~ e from the induction signal memory circuit 7 will be explained. First, the induction signal a is recognized by detecting the greatest value in the induction signal memory circuit 7 and the positions of the first and second sense lines which detect the induction signal a can be determined from its address (1000 + 3m + 4). Since the induction signals 104 are sequentially stored in the induction signal memory circuit 7 in accordance with the method descrived above, the induction signals on the right and left of the induction signal a are stored at the addresses of ±1 of the address of the induction signal a. In other words, the induction signal b is stored at address 1000 + 3m + 3 and the induction signal c, at address 1000 + 3m + 5. The induction signals above and below the induction signal a are stored at the addresses of ±m of the address of the induction signal a. In other words, the induction signal d is stored at address 1000 + 2m + 4 and the induction signal e, at address 1000 + 4m + 4. Therefore, the data necessary for the coordinates calculation or in other words, induction signals a~e and the positions of the first and second sense lines which detect the induction signal a in the embodiment described above, can be determined by detecting the maximum value from the induction signal memory circuit 7.

As described above, the coordinates can be determined by detecting the maximum value of the induction signal, the positions of the first and second sense lines detecting the maximum value, and further the induction signals both on the right and left and above and below the induction signal detecting the maximum value, from the induction signal memory circuit 7 by the control circuit 6.

Incidentally, various methods may be employed for processing in the control circuit 6. As to scanning, for example, it is possible to employ a method which does not make full scanning from next time once the maximum value of the induction signal necessary for the coordinates calculation is detected by full scanning, but makes scanning of only the protions near the maximum value of the detected induction signal (this scanning is referred to as "partial scanning") to make coordinates calculation. The description will be given with reference to Fig. 1 about the case where the range of partial scanning covers two each sense lines on the right and left and above and below the sense line which detects the maximum value of the induction signal. When the coordinates indicator 8 is positioned at the portion A in Fig. 1, the range of partial scanning is from the sense lines $y_2$ to $y_6$ of the first sense line group S1 and from the sense lines $x_2$ to $x_6$ of the second sense line group S2. In other words, scanning is made from the selection of the sense lines $y_2$ and $x_2$ to the selection of the sense lines $y_6$ and $x_6$, and 25 kinds of induction signals are sequentially stored in the induction signal memory circuit 7. Then, the coordinates calculation processing is made in the same way as in the embodiment descrived above. In comparison with the embodiment given above, this embodiment needs only 25 bytes as the address space of the induction signal memory circuit 7 and the time necessary for one scanning becomes shorter. Therefore, coordinates detection capacity per unit time can be improved.

As another example of processing by the control circuit 6, there is a method which judges a threshold value without detecting the maximum value in full scanning. In other words, this is the method which shifts to partial scanning when an induction signal greater than a threshold value is detected in full scanning. According to this method, processing can shift to partial scanning during full scanning, so that the time till the first coordinates calculation can be shortened and response of the coordinates input apparatus can be improved.

Furthermore, as to the processing of the coordinates calculation, various systems that calculate the coordinates by use of the maximum value or its peripheral induction signals and that have been devised at present can be employed, besides the system which determines the coordinates by use of three kinds of signals, i.e. the maximum value of the induction signal and the signals on both sides of the former.

The coordinates indicator in the embodiment described above uses a hollow coil 80 as shown in Fig. 4, but if a coil with a magnetic body is used in place of the hollow coil, efficiency of detection of the induction signals can of course be improved. An example of the coil with a magnetic body is the one having equivalent characteristics to those of a bar antenna used in a medium waveband radio receiver because the frequency of the excitation signal in the embodiment described above is 614.4 KHz.

Though the embodiment described above uses the 614.4 KHz sine wave as the excitation signal, the frequency and the waveshape are not particularly limited thereto.

Figs. 8 and 9 show other examples of the sense line groups in this invention. Fig. 8 shows an example where the width of the sense line is expanded and Fig. 9 shows the example where the signal induced in the second sense line group is inputted into a differential amplifier 82. In this case, the scanning circuit 8 sequentially turns on every two analog switches $81_1$ and $81_2$, $81_2$ and $81_3$, and $81_3$ and $81_4$. The coordinates can be calculated in this configuration of these sense line groups, too, by the same method as that of the embodiment descrived above. Various modifications may be made to the sense line itself such as a sense line having a pluraility of windings.

As described above, the present invention determines the coordinates by extending two sense lines groups each along either of the X-Y orthogonal coordinates axes, sequentially exciting one of the sense line groups by the excitation circuit, processing sequentially the induction signals induced in the other sense line group when the coordinates indicator having the resonance circuit resonating with this excitation signal is brought close to one of the sense line groups, storing the magnitude of the processed induction signal in the induction signal memory circuit, and determining the coordinates from this induction signal. Therefore, since the necessity for applying the signals from the coordinates input apparatus main body to the coordinates indicator through the cables is eliminated, the cables that has been necessary between the coordinates input apparatus main body and the coordinates indicator in the conventional coordinates input apparatus can be eliminated.

Accordingly, an operator can use the coordinates indicator in the same way and with the same feeling as ordinary writing instruments when he inputs characters and figures on the coordinates input apparatus, and the coordinates input apparatus having high operability and not limiting at all the movement of the coordinates indicator can be provided. Moreover, the trouble due to breakage of the cables between the coordinates input apparatus main body and the coordinates indicator, that has been one of the problems with the conventional coordinates input apparatus, can be eliminated completely and reliability of the coordinates input apparatus can be improved.

## Claims

1. A coordinates input apparatus comprising a first sense line group (S1) having a plurality of sense lines disposed in parallel with one of the X-Y orthogonal coordinates axes, a second sense line group (S2) having a plurality of sense lines disposed in parallel with the other of the X-Y orthogonal coordinates axes, first scanning means (2) for sequentially selecting said first sense line group (S1), excitation means (4) for exciting said first sense line group (S1), second scanning means (3) for sequentially selecting said second sense line group (S2), signal processing means (5) for processing induction signals induced in said second sense line group (S2), induction signal memory means (7) for storing the magnitude of the induction signals processed by said signal processing means, control means (6) for determining coordinates from the induction signals stored in said induction signal memory means, and coordinates indicator (8) having a resonance means for resonating with the excitation signal of said excitation means (4),
characterized in that said first scanning means (2) is connected to said excitation means (4) exclusively, and said second scanning means (3) is connected to said signal processing means (5) exclusively.

2. A coordinates input apparatus as claimed in claim 1 wherein said first scanning means (2) has first decorder means (20) receiving first selection signal outputted from said control means and a plurality of switch means (21) for applying an excitation signal outputted from excitation means (4) to said first sense line responsive to signals from said decorder means.

3. A coordinates input apparatus as claimed in claim 1 wherein said second scanning means (3) has second decorder means (20) receiving second selection signal outputted from said control means and a plurality of switch means (21) for outputting induction signals induced in said second sense line group to said signal processing means (5).

4. A coordinates input apparatus as claimed in claim 1 wherein said signal processing means (5) has amplification means (50) for amplifying said induction signals, detection means (51) for detecting amplified induction signals, smoothing means (52) for smoothing output of said detection means and analog-digital conversion means (53) for converting output of said smoothing means.

5. A coordinates input apparatus as claimed in claim 1 wherein said coordinates indicator (8) includes capacitor means (81) and coil means (80) as resonance means.

6. A coordinates input apparatus as claimed in claim 1 wherein each of said sense lines has a turned portion and one ends of said sense lines are commonly connected each others.

7. A coordinates input apparatus as claimed in claim 1 wherein said control means (6) includes means for calculating a position of said coordinates indicator in one sense line from a plurality of induction signal data.

8. A coordinates input apparatus as claimed in claim 7 wherein said calculation means includes means for determining a position along one axes from the maximum induction signal, signal immediately after the maximum signal and signal immediately before the maximum signal.

9. A coordinates input apparatus as claimed in claim 7 wherein said calculation means includes means for determining a position along one axes from the maximum induction signal and adjacent two peaks of induction signals.

**Patentansprüche**

1. Ein Koordinateneingabegerät beinhaltend eine erste Abfrageleitungsgruppe (S1) mit einer Vielzahl von Abfrageleitungen, die parallel zu einer der orthogonalen X-Y-Koordinatenachsen angeordnet sind, eine zweite Abfrageleitungsgruppe (S2) mit einer Vielzahl von Abfrageleitungen, die parallel zu der anderen X-Y-Koordinatenachse angeordnet sind, erste Abtastmittel (2) zum sequentiellen Anwählen der ersten Abfrageleitungsgruppe (S1), Erregermittel (4) zur Erregung der ersten Abfrageleitungsgruppe (S1), zweite Abtastmittel (3) zum sequentiellen Anwählen der zweiten Abfrageleitungsgruppe (S2), ein Signalverarbeitungsmittel (5) zur Verarbeitung von in der zweiten Abfrageleitungsgruppe (S2) induzierten Induktionssignalen, Induktionssignal-Speichermittel (7) zum Speichern der Menge der durch dieses Signalverarbeitungsmittel verarbeiteten Induktionssignale, ein Steuermittel (6) zur Bestimmung von Koordinaten aus den im Induktionssignal-Speichermittel gespeicherten Induktionssignalen, und ein Koordinatenanzeiger (8) mit einem Resonanzmittel zum in Resonanz Treten mit dem Erregersignal aus dem Erregermittel (4), dadurch gekennzeichnet, daß das erste Abtastmittel (2) ausschließlich mit dem Erregermittel (4) verbunden ist, und daß das zweite Abtastmittel (3) ausschließlich mit dem Signalverarbeitungsmittel (5) verbunden ist.

2. Ein Koordinateneingabegerät gemäß Anspruch 1, wobei das erste Abtastmittel (2) ein erstes Decodiermittel (20) zur Aufnahme eines ersten, vom Steuermittel ausgegebenen Wählzeichensignals, und eine Vielzahl von Schaltermitteln (21) zur Eingabe eines vom Erregermittel (4) ausgegebenen Erregersignals in die erste Abfrageleitung in Reaktion auf Signale aus dem Decodiermittel aufweist.

3. Ein Koordinateneingabegerät gemäß Anspruch 1, wobei das zweite Abtastmittel (3) ein zweites Decodiermittel (20) zur Aufnahme eines zweiten aus dem Steuermittel ausgegebenen Wählzeichensignals, und eine Vielzahl von Schaltermitteln (21) zur Ausgabe von in der zweiten Abfrageleitungsgruppe induzierten Induktionssignalen an das Signalverarbeitungsmittel (5) aufweist.

4. Ein Koordinateneingabegerät gemäß Anspruch 1, wobei das Signalverarbeitungsmittel (5) ein Verstärkermittel (50) zur Verstärkung der Induktionssignale, ein Abtastmittel (51) zum Abtasten der verstärkten Induktionssignale, ein Glättmittel (52) zum Glätten der Abtastmittelausgabe, sowie ein Analog-Digital-Wandlermittel (53) zur Umwandlung der Glättmittelausgabe aufweist.

5. Ein Koordinateneingabegerät gemäß Anspruch 1, wobei der Koordinatenanzeiger (8) ein Kondensatormittel (81) und ein Spulenmittel (80) als Resonanzmittel beinhaltet.

6. Ein Koordinateneingabegerät gemäß Anspruch 1, wobei jede Abfrageleitung einen umgedrehten Teil hat und die Abfrageleitungen jeweils an einem Ende miteinander verbunden sind.

7. Ein Koordinateneingabegerät gemäß Anspruch 1, wobei das Steuermittel (6) ein Mittel zur Berechnung der Position des Koordinatenanzeigers in einer Abfrageleitung aus einer Vielzahl von Induktionssignaldaten hat.

8. Ein Koordinateneingabegerät gemäß Anspruch 7, wobei das Rechenmittel ein Mittel zur Bestimmung einer Position entlang einer Achse aus dem maximalen Induktionssignal, dem Signal unmittelbar nach dem maximalen Signal, und dem Signal unmittelbar vor dem maximalen Signal beinhaltet.

9. Ein Koordinateneingabegerät gemäß Anspruch 7, wobei das Rechenmittel ein Mittel zur Bestimmung einer Position entlang einer Achse aus dem maximalen Induktionssignal und zwei angrenzenden Induktionssignalspitzen beinhaltet.

**Revendications**

1. Dispositif de détermination de coordonnées comprenant un premier groupe de lignes de palpage ou de lecture (S1) qui comporte une pluralité de lignes de palpage ou de lecture disposées en parallèle avec l'un des axes de coordonnées orthogonaux X-Y, un second groupe de lignes de palpage ou de lecture (S2) comprenant une pluralité de lignes de palpage ou de lecture disposées en parallèle avec l'autre des axes de coordonnées orthogonaux X-Y, un premier moyen de balayage (2) servant à sélectionner séquentiellement ledit premier groupe de lignes de palpage ou de lecture (S1), un moyen d'excitation (4) servant à exciter ledit premier groupe de lignes de palpage ou de lecture (S1), un second moyen de balayage (3) servant à sélectionner séquentiellement ledit second groupe de lignes de palpage ou de lecture (S2), un moyen de traitement de signal (5) servant à traiter les signaux d'induction de traitement induits dans ledit second groupe de lignes de palpage ou de lecture (S2), un moyen de mémoire de signal d'induction (7) servant à mémoriser l'amplitude des signaux d'induction traités par ledit moyen de traitement de signal, un moyen de commande (6) servant à déterminer les coordonnées à partir des signaux d'induction mémorisés dans ledit moyen de mémoire de signal d'induction ainsi qu'un indicateur de coordonnées (8) qui comporte un moyen de résonance destiné à résonner avec le signal d'excitation dudit moyen d'excitation (4),

caractérisé en ce que ledit premier moyen de balayage (2) est relié exclusivement audit moyen d'excitation (4) et en ce que ledit second moyen de balayage (3) est relié exclusivement audit moyen de traitement de signal (5).

2. Dispositif de détermination de coordonnées selon la revendication 1, dans lequel ledit premier moyen de balayage (2) comporte un premier moyen formant décodeur (20) qui reçoit un premier signal de sélection délivré par ledit moyen de commande et une pluralité de moyens de commutation (21) servant à appliquer un signal d'excitation délivré par un moyen d'excitation (4) à ladite première ligne de palpage ou de lecture sensible aux signaux provenant dudit moyen formant décodeur.

3. Dispositif de détermination de coordonnées selon la revendication 1, dans lequel ledit second moyen de balayage (3) comporte un second moyen formant décodeur (20) qui reçoit un second signal de sélection délivré par ledit moyen de commande et une pluralité de moyens formant commutateur (21) servant à délivrer des signaux d'induction induits dans ledit second groupe de lignes de palpage ou de lecture audit moyen de traitement de signal (5).

4. Dispositif de détermination de coordonnées selon la revendication 1, dans lequel ledit moyen de traitement de signal (5) comporte un moyen d'amplification (50) servant à amplifier lesdits signaux d'induction, un moyen de détection (51) servant à détecter des signaux d'induction amplifiés, un moyen de lissage (52) servant à lisser la sortie dudit moyen de détection et un moyen de conversion analogique/numérique (53) servant à convertir la sortie dudit moyen de lissage.

5. Dispositif de détermination de coordonnées selon la revendication 1, dans lequel ledit indicateur de coordonnées (8) comprend un moyen formant condensateur (81) et un moyen formant bobine (80) comme moyens de résonance.

6. Dispositif de détermination de coordonnées selon la revendication 1, dans lequel chacun desdits lignes de palpage ou de lecture comporte une partie inversée, une extrémité desdits lignes de palpage ou de lecture étant reliées entre elles.

7. Dispositif de détermination de coordonnées selon la revendication 1, dans lequel ledit moyen formant commande (6) comprend un moyen servant à calculer une position dudit indicateur de coordonnées dans une ligne de palpage ou de lecture à partir d'une pluralité de données de signal d'induction.

8. Dispositif de détermination de coordonnées selon la revendication 7, dans lequel ledit moyen de calcul comprend un moyen servant à déterminer une position suivant un axe à partir du signal d'induction maximal, d'un signal suivant immédiatement le signal maximal et d'un signal précédant immédiatement le signal maximal.

9. Dispositif de détermination de coordonnées selon la revendication 7, dans lequel ledit moyen de calcul comprend un moyen servant à déterminer une position suivant un axe depuis le signal d'induction maximal et de deux crêtes adjacentes de signaux d'induction.

# FIG. 1

# FIG. 2

10

# FIG. 3

```
103    50                          51                  52          106    53              104
   ┌──────────────┐      ┌──────────────┐    ┌──────────────┐      ┌──────────────┐
───│ AMPLIFICATION│──────│  DETECTION   │────│  SMOOTHING   │──────│AD CONVERSION │───
   │   PORTION    │      │   PORTION    │    │   PORTION    │      │   PORTION    │
   └──────────────┘      └──────────────┘    └──────────────┘      └──────────────┘
```

# FIG. 4

80   81

# FIG. 5

106

101  y2  y3  y4  y5  y6

102  $X_4$ $X_5$ $X_6$ $X_m$ $X_1$ $X_2$ $X_3$ $X_4$ $X_5$ $X_6$ $X_m$ $X_1$ $X_2$ $X_3$ $X_4$ $X_5$ $X_6$ $X_m$ $X_1$ $X_2$ $X_3$ $X_4$ $X_5$ $X_6$ $X_m$ $X_1$ $X_2$ $X_3$ $X_4$

EP 0 388 860 B1

# FIG.6

(1) (2) (3) (4) (5) (6) (7)

POSITION

EP 0 388 860 B1

# FIG. 7

1000+(m × n)

1000+4m+4

1000+3m+5
1000+3m+4
1000+3m+3

1000+2m+4

1001

# FIG. 8

# FIG. 9

8

82

81₁  81₃

81₂  81₄